# EUROPEAN PATENT APPLICATION

(11) **EP 4 841 514 A1**
(43) Date of publication of application: **18.11.2026**
(21) Application number: 24926657.8
(22) Date of filing: 15.08.2024
(51) Int. Cl.: G06N 3/096, G06N 3/042, G06N 3/0464, G06F 40/30, G06F 18/22, G06F 18/25, G06Q 50/06, G06N 3/048

(54) **POWER CROSS-MODAL BIDIRECTIONAL KNOWLEDGE TRANSFER METHOD AND APPARATUS, AND DEVICE AND STORAGE MEDIUM**

(30) Priority: 01.03.2024 CN 202410232948
(71) Applicant: China Electric Power Research Institute, Beijing 100192 (CN); State Grid Corporation of China, Beijing 100031 (CN)
(72) Inventor: ZHENG, Min, Beijing 100192 (CN); WU, Chunpeng, Beijing 100192 (CN); WANG, Yue, Beijing 100192 (CN); YE, Qinghe, Beijing 100192 (CN); LIU, Weiwei, Beijing 100192 (CN); CHANG, Ke, Beijing 100192 (CN); ZHOU, Fei, Beijing 100192 (CN)
(74) Representative: Murgitroyd & Company
(86) International application number: PCT/CN2024/112500
(87) International publication number: WO 2025/179790

(57) **Abstract**

The present invention relates to the technical field of knowledge transfer, and specifically to a power cross-modal bidirectional knowledge transfer method and apparatus based on intermediary space construction, and a device and a storage medium. The method comprises: using graph modeling and a graph neural network to extract a first feature of first modal data, and using a large language model to extract a second feature of second modal data; on the basis of the similarity between the first feature and the second feature and a corresponding loss function, constructing an intermediary space; using a loss function in the intermediary space to iteratively optimize parameters in the graph neural network and the large language model; and on the basis of the graph modeling, the graph neural network with parameters iteratively optimized, and the feature extracted by the large language model, performing knowledge transfer in the intermediary space. By means of the method, relationship features extracted in different modes are aligned in an intermediary space, thereby realizing bidirectional knowledge transfer between different modal data.

## Description

### CROSS-REFERENCE TO RELATED APPLICATION(S)

The present disclosure is filed based on and claims the priority of Chinese Patent Application No. 202410232948.3, filed on March 1, 2024, and entitled "POWER CROSS-MODAL BIDIRECTIONAL KNOWLEDGE TRANSFER METHOD BASED ON INTERMEDIARY SPACE CONSTRUCTION", the entire contents of which are incorporated herein by reference.

### TECHNICAL FIELD

The present disclosure relates to the technical field of knowledge transfer, and in particular, to a power cross-modal bidirectional knowledge transfer method and apparatus based on intermediary space construction, a device, and a storage medium.

### BACKGROUND

Knowledge transfer refers to the process of applying knowledge learned in one field or task to another field or task, for example, applying knowledge learned in the visual domain to the textual domain. It is capable of helping us utilize existing knowledge and experience to solve new problems or tasks, thereby accelerating the learning process and improving performance. The goal of knowledge transfer is to improve the learning efficiency and performance for new tasks by utilizing existing knowledge and experience. In the electric power field, many business scenarios involve the use of visual domain-textual domain knowledge transfer.

In the electric power field, many business scenarios involve the use of visual domain-textual domain knowledge transfer. However, due to the modal difference between the visual domain and the textual domain, knowledge transfer cannot be performed directly.

### SUMMARY

In view of this, the present disclosure provides a power cross-modal bidirectional knowledge transfer method and apparatus based on intermediary space construction, a device, and a storage medium, so as to solve the problem of how to perform knowledge transfer between cross-modal data.

In a first aspect, the present disclosure provides a power cross-modal bidirectional knowledge transfer method based on intermediary space construction, the method including:
extracting a first feature of first modal data by using graph modeling and a graph neural network, and extracting a second feature of second modal data by using a large language model;
constructing an intermediary space based on a similarity between the first feature and the second feature and a corresponding loss function;
iteratively optimizing parameters in the graph neural network and parameters in the large language model by using the loss function in the intermediary space; and
performing knowledge transfer in the intermediary space based on features extracted by the graph modeling, the graph neural network with the parameters being iteratively optimized, and the large language model with the parameters being iteratively optimized.

In the power cross-modal bidirectional knowledge transfer method based on intermediary space construction provided in the embodiments of the present disclosure, the first feature of the first modal data is extracted by using graph modeling and the graph neural network, and the second feature of the second modal data is extracted by using the large language model; the intermediary space is constructed based on the similarity between the first feature and the second feature and the corresponding loss function; the parameters in the graph neural network and the parameters in the large language model are iteratively optimized by using the loss function in the intermediary space; and knowledge transfer is performed in the intermediary space based on the features extracted by the graph modeling, the graph neural network with the parameters being iteratively optimized, and the large language model. Hence, by means of the method, relationship features extracted from different modalities are aligned in the intermediary space, thereby implementing bidirectional knowledge transfer between data of different modalities.

In an optional implementation, the first modal data is image data, and extracting the first feature of the first modal data by using the graph modeling and the graph neural network includes: extracting an object node set, a connection node set, and a node label of the first modal data by using the graph modeling; respectively extracting a first node feature of the object node set and a first connection feature of the connection node set by using the graph neural network; determining a node label semantic feature and a connection label semantic feature based on a product of a weight matrix of the graph neural network and the node label; and determining the first feature of the first modal data based on joint optimization of the first node feature and the node label semantic feature, and the first connection feature and the connection label semantic feature.

In an optional implementation, determining the first feature of the first modal data based on the joint optimization of the first node feature and the node label semantic feature, and the first connection feature and the connection label semantic feature includes: obtaining an initial joint node feature by jointly processing the first node feature and the node label semantic feature based on an activation function and the weight matrix of the graph neural network; obtaining an initial joint connection feature by jointly processing the first connection feature and the connection label semantic feature based on the activation function and the weight matrix of the graph neural network; and performing joint node feature optimization based on the initial joint node feature, and performing joint connection feature optimization based on the initial joint connection feature and corresponding connected initial joint node feature, so as to obtain an optimized joint node feature and an optimized joint connection feature, where the joint node feature and the joint connection feature constitute the first feature.

In this embodiment, by extracting the first node feature and the node label semantic feature, and the first connection feature and the connection label semantic feature through the graph neural network, and performing feature optimization and updating in a joint optimization manner, information may be effectively propagated and integrated, thereby obtaining a global context over the entire image data.

In an optional implementation, the second modal data is text data, and extracting the second feature of the second modal data by using the large language model includes: acquiring a word order path of the second modal data as an object node and a semantic feature of the second modal data as a connection node; and extracting a word order feature of the object node and a semantic feature of the connection node by using the large language model, where the word order feature and the semantic feature constitute the second feature.

In this embodiment, text feature extraction is performed based on context feature representation of word order and semantics, specifically using the large language model for feature extraction, which may effectively capture the context relationships contained in the word order and semantics of the text.

In an optional implementation, constructing the intermediary space based on the similarity between the first feature and the second feature and the corresponding loss function includes: calculating the similarity between the first feature and the second feature; and constructing the loss function based on maximization of the similarity, where the similarity and the loss function constitute the intermediary space.

In this embodiment, by calculating the similarity and constructing the loss function based on maximization of the similarity, bidirectional knowledge transfer between different modalities may be accurately implemented in the intermediary space constructed based on the similarity and the loss function.

In an optional implementation, the loss function is expressed by the following formula: $\begin{matrix}L = {\sum }_{i , j , k}^{N} {\sum }_{{M}_{i} = 1}^{2} {\sum }_{{M}_{j} = 1}^{2} {\sum }_{{M}_{k} = 1}^{2} max \left(S\left({x}_{i}^{{M}_{i}}, {x}_{k}^{{M}_{k}}\right)-S\left({x}_{i}^{{M}_{i}}, {x}_{j}^{{M}_{j}}\right)+{α}_{1},0\right) + \\ {\sum }_{i , j , k , l}^{N} {\sum }_{{M}_{i} = 1}^{2} {\sum }_{{M}_{j} = 1}^{2} {\sum }_{{M}_{k} = 1}^{2} {\sum }_{{M}_{l} = 1}^{2} max \left(S\left({x}_{l}^{{M}_{l}}, {x}_{k}^{{M}_{k}}\right)-S\left({x}_{i}^{{M}_{i}}, {x}_{j}^{{M}_{j}}\right)+{α}_{2},0\right)\end{matrix}$ where *s*( ) represents the similarity, *α*₁ and *α*₂ represent hyper-parameters, *xᵢ* represents an anchor point, *xⱼ* represents a positive sample, *xₖ* represents a first negative sample, *x*₁ represents a second negative sample, *M* represents a modality, *M* = 1 represents the first modality, and *M* = *2* represents the second modality.

In an optional implementation, the first feature includes a joint node feature and a joint connection feature, and the second feature includes a word order feature and a semantic feature; calculating the similarity between the first feature and the second feature includes: calculating a first similarity between the joint node feature and the word order feature by using an inner product; calculating a second similarity between the joint connection feature and the semantic feature by using an inner product; and adding the first similarity and the second similarity to obtain the similarity between the first feature and the second feature.

In this embodiment, since the first feature and the second feature respectively include two features, the similarities of the corresponding features are calculated respectively, and then the two similarities are summed, thereby enabling accurate calculation of the similarity.

In a second aspect, the present disclosure provides a power cross-modal bidirectional knowledge transfer apparatus based on intermediary space construction, the apparatus includes:
a feature extraction part, configured to extract a first feature of first modal data by using graph modeling and a graph neural network, and extract a second feature of second modal data by using a large language model;
a space construction part, configured to construct an intermediary space based on a similarity between the first feature and the second feature and a corresponding loss function;
an optimization part, configured to iteratively optimize parameters in the graph neural network and parameters in the large language model by using the loss function in the intermediary space; and
a knowledge transfer part, configured to perform knowledge transfer in the intermediary space based on features extracted by the graph modeling, the graph neural network with the parameters being iteratively optimized, and the large language model with the parameters being iteratively optimized.

In a third aspect, the present disclosure provides a computer device, including: a memory and a processor, where the memory and the processor are communicatively connected to each other, the memory stores computer instructions, and the processor, upon executing the computer instructions, executes the power cross-modal bidirectional knowledge transfer method based on intermediary space construction according to the first aspect or any implementation thereof.

In a fourth aspect, the present disclosure provides a computer-readable storage medium, where the computer-readable storage medium stores computer instructions, and the computer instructions are used to cause a computer to execute the power cross-modal bidirectional knowledge transfer method based on intermediary space construction according to the first aspect or any implementation thereof.

### BRIEF DESCRIPTION OF THE DRAWINGS

In order to more clearly illustrate the technical solutions in the specific embodiments of the present disclosure or in the prior art, the accompanying drawings to be used in the description of the specific embodiments or the prior art will be briefly introduced below. Obviously, the accompanying drawings described below are some implementations of the present disclosure, and for a person of ordinary skill in the art, other drawings may also be obtained according to these drawings without creative efforts.
FIG. 1 is a schematic flowchart of a power cross-modal bidirectional knowledge transfer method based on intermediary space construction according to the embodiments of the present disclosure;
FIG. 2 is a schematic flowchart of another power cross-modal bidirectional knowledge transfer method based on intermediary space construction according to the embodiments of the present disclosure;
FIG. 3 is a structural block diagram of a power cross-modal bidirectional knowledge transfer apparatus based on intermediary space construction according to the embodiments of the present disclosure; and
FIG. 4 is a schematic diagram of hardware structure of a computer device according to the embodiments of the present disclosure.

### DETAILED DESCRIPTION

In order to make the objectives, technical solutions, and advantages of the embodiments of the present disclosure clearer, the technical solutions in the embodiments of the present disclosure will be described clearly and completely below in conjunction with the accompanying drawings in the embodiments of the present disclosure. Obviously, the described embodiments are a part of the embodiments of the present disclosure, rather than all of the embodiments. Based on the embodiments in the present disclosure, all other embodiments obtained by a person skilled in the art without making creative efforts fall within the protection scope of the present disclosure.

According to the embodiments of the present disclosure, embodiments of a power cross-modal bidirectional knowledge transfer method based on intermediary space construction are provided. It should be noted that the steps illustrated in the flowcharts of the accompanying drawings may be executed in a computer system such as a set of computer-executable instructions, and although a logical sequence is shown in the flowcharts, in some cases, the steps shown or described may be executed in a sequence different from that shown here.

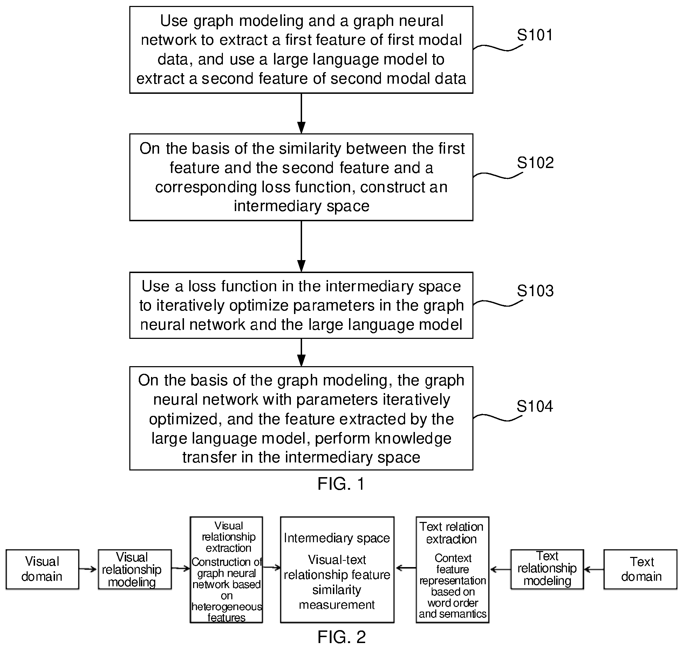

In this embodiment, a power cross-modal bidirectional knowledge transfer method based on intermediary space construction is provided, which may be used in an electronic device such as a computer, a mobile phone, a tablet computer, etc. FIG. 1 is a flowchart of the power cross-modal bidirectional knowledge transfer method based on intermediary space construction according to the embodiments of the present disclosure. As shown in FIG. 1, the process includes the following steps.

In S101, a first feature of first modal data is extracted by using graph modeling and a graph neural network, and a second feature of second modal data is extracted by using a large language model.

Specifically, the first modal data and the second modal data belong to data of different modalities, for example, the first modal data is visual domain data, and the second modal data is textual domain data, that is, the first modal data may be image data, and the second modal data may be text data. In a case of extracting the first feature of the first modal data, graph modeling and the graph neural network algorithm are used, where a graph modeling algorithm may adopt a relationship modeling algorithm in related art, so as to implement relationship mining in the first modal data. For the mined relationships, the graph neural network algorithm may be used to extract features therein, so as to implement accurate extraction of the first feature in the first modal data. In a case of performing feature extraction on the second modal data, any large language model in the related art may be used, and the large language model refers to a deep learning model trained using a large amount of text data, which may generate natural language text or understand the meaning of language text.

In S102, an intermediary space is constructed based on a similarity between the first feature and the second feature and a corresponding loss function.

Specifically, the intermediary space is used to implement alignment between features of data of different modalities, that is, the first feature of the first modal data and the second feature of the second modal data are mapped into the intermediary space, thereby implementing knowledge transfer between the first modal data and the second modal data. In this embodiment, the construction of the intermediary space is implemented through similarity calculation and loss function construction, where the loss function is constructed based on the calculated similarity.

In S103, parameters in the graph neural network and parameters in the large language model are iteratively optimized by using the loss function in the intermediary space.

Specifically, since the loss function is determined by calculating the similarity between the first feature of the first modal data and the second feature of the second modal data, the process of tuning model parameters using the loss function is a process of making the first feature and the second feature more similar, that is, enabling alignment between features extracted by the tuned model parameters, thereby implementing knowledge transfer between data of different modalities. It should be noted that the process of tuning model parameters based on the loss function may refer to the implementation in the related art and will not be repeated herein.

In S104, knowledge transfer is performed in the intermediary space based on features extracted by the graph modeling, the graph neural network with the parameters being iteratively optimized, and the large language model with the parameters being iteratively optimized.

Specifically, after using the loss function to tune the model parameters, the graph modeling and the graph neural network with the parameters being iteratively optimized are used to extract the first feature of the first modal data, and the large language model with the parameters being iteratively optimized is used to extract the second feature of the second modal data; at this time, the extracted first feature and second feature are most similar, so knowledge transfer may be performed in the intermediary space.

In the power cross-modal bidirectional knowledge transfer method based on intermediary space construction provided in the embodiments of the present disclosure, the first feature of the first modal data is extracted by using graph modeling and the graph neural network, and the second feature of the second modal data is extracted by using the large language model; the intermediary space is constructed based on the similarity between the first feature and the second feature and the corresponding loss function; the parameters in the graph neural network and the parameters in the large language model are iteratively optimized by using the loss function in the intermediary space; and knowledge transfer is performed in the intermediary space based on the features extracted by the graph modeling, the graph neural network with the parameters being iteratively optimized, and the large language model. Hence, by means of the method, relationship features extracted from different modalities are aligned in the intermediary space, thereby implementing bidirectional knowledge transfer between data of different modalities.

In this embodiment, a power cross-modal bidirectional knowledge transfer method based on intermediary space construction is provided, the process includes the following steps.

In S201, a first feature of first modal data is extracted by using graph modeling and a graph neural network, and a second feature of second modal data is extracted by using a large language model.

Specifically, extracting the first feature of the first modal data by using the graph modeling and the graph neural network includes the following step.

In S2011, an object node set, a connection node set, and a node label of the first modal data are extracted by using the graph modeling; where in this embodiment, a relationship modeling method *NeuralMotifs* is used to extract the object node set, connection node set, and the node label of the first modal data. The specific extraction manner may refer to the techniques in the related art and will not be repeated herein. For example, in a case where the first modal data is an image, the content extracted by using the relationship modeling method may be formalized as *G* = {*O,C,E*}, where *O =* {*oᵢ* | *i* = 1,2,..., *Nₒ*} represents the object node set, *C* = {*cᵢⱼ* | *i* = 1,2,..., *N_{c}, j* = 1,2,..., *N_{c}*} represents the connection node set, *cᵢⱼ* connects the two object nodes *oᵢ* and *oⱼ*, and E represents an edge set, which is virtual and not an entity, and is not involved in this embodiment, so the formalization is *G = {O,C}.*

It should be noted that the object node set may refer to a set composed of objects in the image. For example, if an image includes two persons, glasses, and food, the set composed of these constitutes the object node set, while the connection node set may refer to the relationships between various objects in the image. For example, in the image, one person is wearing glasses and the other person is eating food, then "wearing" and "eating" represent the relationships between the objects, that is, "wearing" and "eating" constitute the connection node set in the image. As for the node label, a node label extracted by using the relationship modeling method *NeuralMotifs* are generally represented by one-hot codes. In the image, a node label is specifically used to annotate a specific position of an object node and a connection node in the image, or in other words, the node label is used to annotate the object node and connection node in the image. In this embodiment, one-hot codes *Loᵢ* and *Lcᵢⱼ* are used to represent the labels of nodes *oᵢ* and *cᵢⱼ.*

In S2012, a first node feature of the object node set and a first connection feature of the connection node set are respectively extracted by using the graph neural network; in this embodiment, in a case of performing feature extraction, a YOLO-V8 algorithm is used as the graph neural network for feature extraction. For the object node set *O* = {*oᵢ* | *i* = 1,2,..., *Nₒ*}, a salient block feature *Vₒ* = {*v_{oᵢ}* | *i =* 1,2,..., *Nₒ*} is extracted as the first feature. For the connection node set *C* = {*c_{¡j}* | *i* = 1,2,..., *N_{c}, j =*1,2,..., *N_{c}*}, an intersection region feature *V_{c}* = {*v_{cᵢⱼ}* | *i* = 1,2,..., *N_{c}, j* = 1,2,..., *N_{c}*} between salient blocks is extracted as the first connection feature. In this way, node feature learning of the object nodes and connection nodes is implemented. It should be noted that the feature extraction of the object node set and the connection node set using the YOLO-V8 algorithm may refer to the feature extraction manner of the algorithm in the related art and will not be repeated herein.

S2013, a node label semantic feature and a connection label semantic feature are determined based on a product of a weight matrix of the graph neural network and the node label; where the node label semantic feature may be represented as *e_{oᵢ}* = *WₒLoᵢ*, the connection label semantic feature may be represented as *e_{cᵢⱼ} = WᵣLcᵢⱼ*, where *Wₒ* and *W_{c}* represent weight matrices of the neural network.

S2014, the first feature of the first modal data is determined based on joint optimization of the first node feature and the node label semantic feature, and the first connection feature and the connection label semantic feature. Herein, the joint optimization specifically includes the following steps: obtaining an initial joint node feature by jointly processing the first node feature and the node label semantic feature based on an activation function and the weight matrix of the graph neural network; obtaining an initial joint connection feature by jointly processing the first connection feature and the connection label semantic feature based on the activation function and the weight matrix of the graph neural network; and performing joint node feature optimization based on the initial joint node feature, and performing joint connection feature optimization based on the initial joint connection feature and corresponding connected initial joint node feature, so as to obtain an optimized joint node feature and an optimized joint connection feature, where the joint node feature and the joint connection feature constitute the first feature.

Specifically, the initial joint node feature may be represented as ${u}_{{o}_{i}} = relu \left({W}_{u}\left⌊{ν}_{{o}_{i}}, {e}_{{o}_{i}}\right⌋\right)$, the initial joint connection feature may be represented as ${u}_{{c}_{ij}} = relu \left({W}_{u}\left⌊{ν}_{{c}_{ij}}, {e}_{{c}_{ij}}\right⌋\right)$, where *Wᵤ* represents the weight matrix of the neural network, and relu represents the activation function. In a case of performing joint optimization of the features, graph convolution is used to update *u_{oᵢ}* and *u_{cᵢⱼ}*, where the object node is self-updated, and the connection node is updated by aggregation from neighboring object nodes. Specifically, during updating, first ${h}_{{o}_{i}}^{0} = {u}_{{o}_{i}}$ and ${h}_{{c}_{ij}}^{0} = {u}_{{c}_{ij}}$ are initialized, let the joint node feature ${h}_{{o}_{i}}^{k} = {g}_{o} \left({h}_{{o}_{i}}^{k - 1}\right)$, the joint connection feature ${h}_{{c}_{ij}}^{k} = {g}_{c} \left({h}_{{o}_{i}}^{k - 1}, {h}_{{c}_{ij}}^{k - 1}, {h}_{{o}_{j}}^{k - 1}\right)$, where *g* represents a fully connected layer, and *g* is followed by a relu activation function. The joint node feature and joint connection feature obtained through this updating and optimization process constitute the first feature.

Specifically, extracting the second feature of the second modal data by using the large language model includes the following steps.

In S2015, a word order path of the second modal data as an object node and a semantic feature of the second modal data as a connection node are acquired; specifically, in this embodiment, text data is taken as the second modal data, the word order feature of the text data is taken as the object node *O'* = {*o'ᵢ*|*i* = 12,..,*N_{o'}*}, and the semantic feature of the text data is taken as the connection node $C ′ = \left\{{c}_{i}^{′}\left|i=1,2,…,{N}_{c ′}\right.\right\}$. For example, if one piece of text data contains *N_{o**'**}* words, a word order of these *N_{o**'**}* words in this piece of text data is the word order path; at this time, the corresponding first node feature of this piece of text data is one word order path with a length of *N_{o**'**}*. The semantic path refers to the extraction of keywords such as subject-predicate-object from the word order path, which is obtained by deleting modifiers and the like from the word order path. When the subject-predicate-object in the word order path is extracted as the semantic path, the length of the semantic path is 3. In this embodiment, a semantic set composed of *r*' semantic paths is taken as the second connection feature.

In S2016, a word order feature of the object node and a semantic feature of the connection node are extracted by using the large language model, where the word order feature and the semantic feature constitute the second feature. In this embodiment, an open-source pre-trained model GPT2 is used as the large language model for feature extraction, that is, extracting the word order feature *T_{o'}* = {*t_{o_{i'}}* | *i* = 1,2,..., *N_{o'}*} from the object node *O'* = {*o'ᵢ* | *i* = 1,2,...,*N_{o'}*}, and extracting the semantic feature *T*_{*c*'} = {*t_{c_{i'}}* | *i* = 1,2,..., *N_{c'}*} from the connection node $C ′ = \left\{{c}_{i}^{′}\left|i=1,2,…,{N}_{c ′}\right.\right\}$ as the second feature. For the specific manner of feature extraction by the large language model, reference can be made to the feature extraction manner in the related art and will not be repeated herein.

In S202, an intermediary space is constructed based on a similarity between the first feature and the second feature and a corresponding loss function.

Specifically, the above S202 includes the following steps.

In S2021, the similarity between the first feature and the second feature is calculated; where the calculation process of the similarity specifically includes: calculating a first similarity between a joint node feature and a word order feature by using an inner product; calculating a second similarity between a joint connection feature and a semantic feature by using an inner product; and adding the first similarity and the second similarity to obtain the similarity between the first feature and the second feature.

That is, the first similarity between the joint node feature and the word order feature may be calculated using formula (1): ${S}_{o} = \left〈{N}_{o}⋅{N}_{o}\right〉$ (1) where *N_{o**'**}* represents the word order feature, Nₒ represents the joint node feature, *Nₒ* and *N_{o**'**}* are both vectors with a dimension of *d* , and 〈 〉 represents the inner product operation.

The second similarity between the joint connection feature and the semantic feature may be calculated using formula (2): ${S}_{c} = \left〈{N}_{c}⋅{N}_{c}\right〉$ (2) where *N_{c'}* represents the semantic feature, and N_{c} represents the joint connection feature. The similarity between the first feature and the second feature may be calculated using formula (3): $S = {S}_{o} + {S}_{c}$ (3)

In S2022, the loss function is constructed based on maximization of the similarity, where the similarity and the loss function constitute the intermediary space. The loss function is expressed by the following formula (4): $\begin{matrix}L = {\sum }_{i , j , k}^{N} {\sum }_{{M}_{i} = 1}^{2} {\sum }_{{M}_{j} = 1}^{2} {\sum }_{{M}_{k} = 1}^{2} max \left(S\left({x}_{i}^{{M}_{i}}, {x}_{k}^{{M}_{k}}\right)-S\left({x}_{i}^{{M}_{i}}, {x}_{j}^{{M}_{j}}\right)+{α}_{1},0\right) + \\ {\sum }_{i , j , k , l}^{N} {\sum }_{{M}_{i} = 1}^{2} {\sum }_{{M}_{j} = 1}^{2} {\sum }_{{M}_{k} = 1}^{2} {\sum }_{{M}_{l} = 1}^{2} max \left(S\left({x}_{l}^{{M}_{l}}, {x}_{k}^{{M}_{k}}\right)-S\left({x}_{i}^{{M}_{i}}, {x}_{j}^{{M}_{j}}\right)+{α}_{2},0\right)\end{matrix}$ (4) where *s*( ) represents the similarity, *α*₁ and *α*₂ represent hyper-parameters, *xᵢ* represents an anchor point, *xⱼ* represents a positive sample, *xₖ* represents a first negative sample, *x*₁ represents a second negative sample, *M* represents a modality, *M* = 1 represents the first modality, and *M* = 2 represents the second modality.

Corresponding to this embodiment, *x* may be understood as a feature extracted from the first modal data or the second modal data, that is, in a case where a subscript of x is i or j, x may be understood as the first feature extracted from the first modal data (since the first feature includes two features, they are represented by i or j respectively, and the same applies to the second feature), and in a case where the subscript of x is k or l, x may be understood as the second feature extracted from the second modal data; or in a case where the subscript of x is i or j, x may be understood as the second feature extracted from the second modal data, and in a case where the subscript of x is k or l, x can be understood as the first feature extracted from the first modal data. In order to better distinguish, a superscript M is set for x; in a case where the superscript M is 1, the corresponding x is a feature in the first modal data; in a case where the superscript M is 2, the corresponding x is a feature in the second modal data. The subscripts i, j, k, l of M correspond to those of x, that is, they have the same meaning as the subscripts of x.

In S203, parameters in the graph neural network and parameters in the large language model are iteratively optimized by using the loss function in the intermediary space; details may refer to S104 in the embodiments shown in FIG. 1, which will not be repeated herein.

In S204, knowledge transfer is performed in the intermediary space based on features extracted by the graph modeling, the graph neural network with the parameters being iteratively optimized, and the large language model with the parameters being iteratively optimized. Details may refer to S104 in the embodiments shown in FIG. 1, which will not be repeated herein.

As a specific application embodiment of the present disclosure, as shown in FIG. 2, taking the visual domain and the text domain as examples, the power cross-modal bidirectional knowledge transfer method based on intermediary space construction is described: first, relationship modeling is performed in the two domains respectively, that is, in the visual domain, the relationship modeling method *NeuralMotifs* is used to extract the object node set, connection node set, and the node label of the first modal data, and in the text domain, the word order path of the second modal data is obtained as the object node, and the semantic feature of the second modal data is obtained as the connection node. Then, a graph neural network (YOLO-V8 algorithm) based on heterogeneous features and a context feature representation based on word order and semantics (large language model) are used to respectively extract relationship features from the visual and textual data. Next, an intermediary space is constructed, the extracted relationship features are mapped into the intermediary space, and similarity measurement is performed, thereby implementing bidirectional knowledge transfer from the visual domain to the text domain and from the text domain to the visual domain.

In this embodiment, a power cross-modal bidirectional knowledge transfer apparatus based on intermediary space construction is also provided, which is configured to implement the above embodiments and preferred implementations, and details that have been described will not be repeated. As used below, the term "module" may be a combination of software and/or hardware that implements a predetermined function. Although the apparatus described in the following embodiments is preferably implemented by software, implementation by hardware, or a combination of software and hardware, is also possible and conceived.

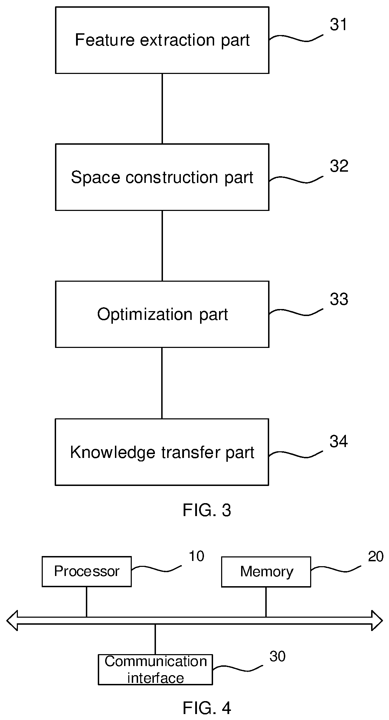

A power cross-modal bidirectional knowledge transfer apparatus based on intermediary space construction is provided in this embodiment, as shown in FIG. 3, including:
a feature extraction part 31, configured to extract a first feature of first modal data by using graph modeling and a graph neural network, and extract a second feature of second modal data by using a large language model;
a space construction part 32, configured to construct an intermediary space based on a similarity between the first feature and the second feature and a corresponding loss function;
an optimization part 33, configured to iteratively optimize parameters in the graph neural network and parameters in the large language model by using the loss function in the intermediary space; and
a knowledge transfer part 34, configured to perform knowledge transfer in the intermediary space based on features extracted by the graph modeling, the graph neural network with the parameters being iteratively optimized, and the large language model with the parameters being iteratively optimized.

In an optional implementation, the first modal data is image data, and the feature extraction part 31 includes:
a first extraction part 311, configured to extract an object node set, a connection node set, and a node label of the first modal data by using graph modeling;
a second extraction part 312, configured to respectively extract a first node feature of the object node set and a first connection feature of the connection node set by using the graph neural network;
a label semantic determination part 313, configured to determine a node label semantic feature and a connection label semantic feature based on a product of a weight matrix of the graph neural network and the node label; and
an extraction optimization part 314, configured to determine the first feature of the first modal data based on joint optimization of the first node feature and the node label semantic feature, and the first connection feature and the connection label semantic feature.

In an optional implementation, the extraction optimization part 314 is specifically configured to obtain an initial joint node feature by jointly processing the first node feature and the node label semantic feature based on an activation function and the weight matrix of the graph neural network; obtain an initial joint connection feature by jointly processing the first connection feature and the connection label semantic feature based on the activation function and the weight matrix of the graph neural network; and perform joint node feature optimization based on the initial joint node feature, and performing joint connection feature optimization based on the initial joint connection feature and corresponding connected initial joint node feature, so as to obtain an optimized joint node feature and an optimized joint connection feature, where the joint node feature and the joint connection feature constitute the first feature.

In an optional implementation, the second modal data is text data, and the feature extraction part 31 further includes:
a path acquisition part 315, configured to acquire a word order path of the second modal data as an object node and a semantic feature of the second modal data as a connection node; and
a third extraction part 316, configured to extract a word order feature of the object node and a semantic feature of the connection node by using the large language model, where the word order feature and the semantic feature constitute the second feature.

In an optional implementation, the space construction part 32 includes:
a similarity calculation part 321, configured to calculate a similarity between the first feature and the second feature; and
a construction sub-part 322, configured to construct the loss function based on maximization of the similarity, where the similarity and the loss function constitute the intermediary space.

In an optional implementation, the loss function is expressed by the above formula (4): $\begin{matrix}L = {\sum }_{i , j , k}^{N} {\sum }_{{M}_{i} = 1}^{2} {\sum }_{{M}_{j} = 1}^{2} {\sum }_{{M}_{k} = 1}^{2} max \left(S\left({x}_{i}^{{M}_{i}}, {x}_{k}^{{M}_{k}}\right)-S\left({x}_{i}^{{M}_{i}}, {x}_{j}^{{M}_{j}}\right)+{α}_{1},0\right) + \\ {\sum }_{i , j , k , l}^{N} {\sum }_{{M}_{i} = 1}^{2} {\sum }_{{M}_{j} = 1}^{2} {\sum }_{{M}_{k} = 1}^{2} {\sum }_{{M}_{l} = 1}^{2} max \left(S\left({x}_{l}^{{M}_{l}}, {x}_{k}^{{M}_{k}}\right)-S\left({x}_{i}^{{M}_{i}}, {x}_{j}^{{M}_{j}}\right)+{α}_{2},0\right)\end{matrix}$ where *s*( ) represents the similarity, *α*₁ and *α*₂ represent hyper-parameters, *xᵢ* represents an anchor point, *xⱼ* represents a positive sample, *xₖ* represents a first negative sample, *x*₁ represents a second negative sample, *M* represents a modality, *M* = 1 represents the first modality, and *M* = 2 represents the second modality.

In an optional implementation, the first feature includes a joint node feature and a joint connection feature, and the second feature includes a word order feature and a semantic feature; the similarity calculation part 321 is specifically configured to calculate a first similarity between the joint node feature and the word order feature by using an inner product; calculate a second similarity between the joint connection feature and the semantic feature by using an inner product; and add the first similarity and the second similarity to obtain the similarity between the first feature and the second feature.

Further functional descriptions of the above modules and units are the same as those in the corresponding embodiments above, and will not be repeated herein.

A computer device is further provided in the embodiments of the present disclosure, it has the power cross-modal bidirectional knowledge transfer apparatus based on intermediary space construction as shown in FIG. 3 above.

Referring to FIG. 4, FIG. 4 is a structural schematic diagram of a computer device provided in an optional embodiment of the present disclosure; as shown in FIG. 4, the computer device includes: one or more processors 10, a memory 20, and interfaces for connecting various components, including a high-speed interface and a low-speed interface. The various components are communicatively connected to each other using different buses, and may be mounted on a common motherboard or in other manners as required. The processor may process instructions executed within the computer device, including instructions stored in the memory or on the memory to display graphical information of a GUI on an external input/output apparatus (such as a display device coupled to the interface). In some optional implementations, if necessary, multiple processors and/or multiple buses may be used together with multiple memories and multiple memories. Likewise, multiple computer devices may be connected, each providing part of the necessary operations (for example, as a server array, a group of blade servers, or a multi-processor system). In FIG. 4, one processor 10 is taken as an example.

The processor 10 may be a central processing unit, a network processor, or a combination thereof. Herein, the processor 10 may further include a hardware chip. The above hardware chip may be an application-specific integrated circuit, a programmable logic device, or a combination thereof. The above programmable logic device may be a complex programmable logic device, a field-programmable gate array, a generic array logic, or any combination thereof.

Herein, the memory 20 stores instructions executable by at least one processor 10, so as to cause the at least one processor 10 to execute the method shown in the above embodiments.

The memory 20 may include a program storage area and a data storage area, where the program storage area may store an operating system, application programs required for at least one function; the data storage area may store data created during use of the computer device according to the presentation of a mini-program landing page, etc. In addition, the memory 20 may include a high-speed random access memory, and may also include a non-transitory memory, such as at least one disk storage device, a flash memory device, or other non-transitory solid-state storage devices. In some optional implementations, the memory 20 may optionally include a memory remotely arranged relative to the processor 10, and these remote memories may be connected to the computer device through a network. Examples of the above network include, but are not limited to, the Internet, an intranet, a local area network, a mobile communication network, and combinations thereof.

The memory 20 may include a volatile memory, for example, a random access memory; the memory may also include a non-volatile memory, for example, a flash memory, a hard disk, or a solid-state drive; the memory 20 may also include a combination of the above types of memories.

The computer device further includes a communication interface 30, used for the computer device to communicate with other devices or a communication network.

A computer-readable storage medium is further provided in the embodiments of the present disclosure; the above method according to the embodiments of the present disclosure may be implemented in hardware, firmware, or may be implemented as computer codes that is capable of being recorded in a storage medium, or as computer codes originally stored in a remote storage medium or a non-transitory machine-readable storage medium and downloaded through a network and stored in a local storage medium, so that the methods described herein may be stored in such software processing on a storage medium using a general-purpose computer, a special-purpose processor, or programmable or special-purpose hardware. Herein, the storage medium may be a magnetic disk, an optical disc, a read-only memory, a random access memory, a flash memory, a hard disk, or a solid-state drive, etc.; furthermore, the storage medium may also include a combination of the above types of memories. It can be understood that a computer, a processor, a microprocessor controller, or programmable hardware includes a storage component that is capable of storing or receiving software or computer code, and in a case where the software or computer code is accessed and executed by the computer, processor, or hardware, the methods shown in the above embodiments are implemented.

Although the embodiments of the present disclosure have been described with reference to the accompanying drawings, a person skilled in the art may make various modifications and variations without departing from the spirit and scope of the present disclosure, and such modifications and variations shall fall within the scope defined by the appended claims.

### INDUSTRIAL APPLICABILITY

The present disclosure provides a power cross-modal bidirectional knowledge transfer method and apparatus based on intermediary space construction, a device, and a storage medium, the first feature of the first modal data is extracted by using graph modeling and the graph neural network, and the second feature of the second modal data is extracted by using the large language model; the intermediary space is constructed based on the similarity between the first feature and the second feature and the corresponding loss function; the parameters in the graph neural network and the parameters in the large language model are iteratively optimized by using the loss function in the intermediary space; and knowledge transfer is performed in the intermediary space based on the features extracted by the graph modeling, the graph neural network with the parameters being iteratively optimized, and the large language model. Hence, by means of the method, relationship features extracted from different modalities are aligned in the intermediary space, thereby implementing bidirectional knowledge transfer between data of different modalities.

## Claims

1. A power cross-modal bidirectional knowledge transfer method based on intermediary space construction, **characterized in that** the method comprises:
extracting a first feature of first modal data by using graph modeling and a graph neural network, and extracting a second feature of second modal data by using a large language model;
constructing an intermediary space based on a similarity between the first feature and the second feature and a corresponding loss function;
iteratively optimizing parameters in the graph neural network and parameters in the large language model by using the loss function in the intermediary space; and
performing knowledge transfer in the intermediary space based on features extracted by the graph modeling, the graph neural network with the parameters being iteratively optimized, and the large language model with the parameters being iteratively optimized.

2. The method according to claim 1, wherein the first modal data is image data, and extracting the first feature of the first modal data by using the graph modeling and the graph neural network comprises:
extracting an object node set, a connection node set, and a node label of the first modal data by using the graph modeling;
respectively extracting a first node feature of the object node set and a first connection feature of the connection node set by using the graph neural network;
determining a node label semantic feature and a connection label semantic feature based on a product of a weight matrix of the graph neural network and the node label; and
determining the first feature of the first modal data based on joint optimization of the first node feature and the node label semantic feature, and the first connection feature and the connection label semantic feature.

3. The method according to claim 2, wherein determining the first feature of the first modal data based on the joint optimization of the first node feature and the node label semantic feature, and the first connection feature and the connection label semantic feature comprises:
obtaining an initial joint node feature by jointly processing the first node feature and the node label semantic feature based on an activation function and the weight matrix of the graph neural network;
obtaining an initial joint connection feature by jointly processing the first connection feature and the connection label semantic feature based on the activation function and the weight matrix of the graph neural network; and
performing joint node feature optimization based on the initial joint node feature, and performing joint connection feature optimization based on the initial joint connection feature and corresponding connected initial joint node feature, so as to obtain an optimized joint node feature and an optimized joint connection feature, wherein the joint node feature and the joint connection feature constitute the first feature.

4. The method according to claim 1, wherein the second modal data is text data, and extracting the second feature of the second modal data by using the large language model comprises:
acquiring a word order path of the second modal data as an object node and a semantic feature of the second modal data as a connection node; and
extracting a word order feature of the object node and a semantic feature of the connection node by using the large language model, wherein the word order feature and the semantic feature constitute the second feature.

5. The method according to claim 1, wherein constructing the intermediary space based on the similarity between the first feature and the second feature and the corresponding loss function comprises:
calculating the similarity between the first feature and the second feature; and
constructing the loss function based on maximization of the similarity, wherein the similarity and the loss function constitute the intermediary space.

6. The method according to claim 5, wherein the loss function is expressed by the following formula: $\begin{matrix}L = {\sum }_{i , j , k}^{N} {\sum }_{{M}_{i} = 1}^{2} {\sum }_{{M}_{j} = 1}^{2} {\sum }_{{M}_{k} = 1}^{2} max \left(S\left({x}_{i}^{{M}_{i}}, {x}_{k}^{{M}_{k}}\right)-S\left({x}_{i}^{{M}_{i}}, {x}_{j}^{{M}_{j}}\right)+{α}_{1},0\right) + \\ {\sum }_{i , j , k , l}^{N} {\sum }_{{M}_{i} = 1}^{2} {\sum }_{{M}_{j} = 1}^{2} {\sum }_{{M}_{k} = 1}^{2} {\sum }_{{M}_{l} = 1}^{2} max \left(S\left({x}_{l}^{{M}_{l}}, {x}_{k}^{{M}_{k}}\right)-S\left({x}_{i}^{{M}_{i}}, {x}_{j}^{{M}_{j}}\right)+{α}_{2},0\right)\end{matrix}$ wherein *s*( ) represents the similarity, *α*₁ and *α*₂ represent hyper-parameters, *xᵢ* represents an anchor point, *xⱼ* represents a positive sample, *xₖ* represents a first negative sample, *x*₁ represents a second negative sample, *M* represents a modality, *M* = 1 represents the first modality, and *M* = 2 represents the second modality.

7. The method according to claim 5, wherein the first feature comprises a joint node feature and a joint connection feature, and the second feature comprises a word order feature and a semantic feature; calculating the similarity between the first feature and the second feature comprises:
calculating a first similarity between the joint node feature and the word order feature by using an inner product;
calculating a second similarity between the joint connection feature and the semantic feature by using an inner product; and
adding the first similarity and the second similarity to obtain the similarity between the first feature and the second feature.

8. A power cross-modal bidirectional knowledge transfer apparatus based on intermediary space construction, **characterized in that** the apparatus comprises:
a feature extraction part, configured to extract a first feature of first modal data by using graph modeling and a graph neural network, and extract a second feature of second modal data by using a large language model;
a space construction part, configured to construct an intermediary space based on a similarity between the first feature and the second feature and a corresponding loss function;
an optimization part, configured to iteratively optimize parameters in the graph neural network and parameters in the large language model by using the loss function in the intermediary space; and
a knowledge transfer part, configured to perform knowledge transfer in the intermediary space based on features extracted by the graph modeling, the graph neural network with the parameters being iteratively optimized, and the large language model with the parameters being iteratively optimized.

9. The apparatus according to claim 8, wherein the first modal data is image data, and the feature extraction part comprises:
a first extraction part, configured to extract an object node set, a connection node set, and a node label of the first modal data by using graph modeling;
a second extraction part, configured to respectively extract a first node feature of the object node set and a first connection feature of the connection node set by using the graph neural network;
a label semantic determination part, configured to determine a node label semantic feature and a connection label semantic feature based on a product of a weight matrix of the graph neural network and the node label; and
an extraction optimization part, configured to determine the first feature of the first modal data based on joint optimization of the first node feature and the node label semantic feature, and the first connection feature and the connection label semantic feature.

10. The apparatus according to claim 9, wherein
the extraction optimization part is specifically configured to obtain an initial joint node feature by jointly processing the first node feature and the node label semantic feature based on an activation function and the weight matrix of the graph neural network; obtain an initial joint connection feature by jointly processing the first connection feature and the connection label semantic feature based on the activation function and the weight matrix of the graph neural network; and perform joint node feature optimization based on the initial joint node feature, and performing joint connection feature optimization based on the initial joint connection feature and corresponding connected initial joint node feature, so as to obtain an optimized joint node feature and an optimized joint connection feature, wherein the joint node feature and the joint connection feature constitute the first feature.

11. The apparatus according to claim 8, wherein the second modal data is text data, and the feature extraction part further comprises:
a path acquisition part, configured to acquire a word order path of the second modal data as an object node and a semantic feature of the second modal data as a connection node; and
a third extraction part, configured to extract a word order feature of the object node and a semantic feature of the connection node by using the large language model, wherein the word order feature and the semantic feature constitute the second feature.

12. The apparatus according to claim 8, wherein the space construction part comprises:
a similarity calculation part, configured to calculate the similarity between the first feature and the second feature; and
a construction sub-part, configured to construct the loss function based on maximization of the similarity, wherein the similarity and the loss function constitute the intermediary space.

13. The apparatus according to claim 12, wherein the loss function is expressed by the following formula: $\begin{matrix}L = {\sum }_{i , j , k}^{N} {\sum }_{{M}_{i} = 1}^{2} {\sum }_{{M}_{j} = 1}^{2} {\sum }_{{M}_{k} = 1}^{2} max \left(S\left({x}_{i}^{{M}_{i}}, {x}_{k}^{{M}_{k}}\right)-S\left({x}_{i}^{{M}_{i}}, {x}_{j}^{{M}_{j}}\right)+{α}_{1},0\right) + \\ {\sum }_{i , j , k , l}^{N} {\sum }_{{M}_{i} = 1}^{2} {\sum }_{{M}_{j} = 1}^{2} {\sum }_{{M}_{k} = 1}^{2} {\sum }_{{M}_{l} = 1}^{2} max \left(S\left({x}_{l}^{{M}_{l}}, {x}_{k}^{{M}_{k}}\right)-S\left({x}_{i}^{{M}_{i}}, {x}_{j}^{{M}_{j}}\right)+{α}_{2},0\right)\end{matrix}$ wherein *s*( ) represents the similarity, *α*₁ and *α*₂ represent hyper-parameters, *xᵢ* represents an anchor point, *xⱼ* represents a positive sample, *xₖ* represents a first negative sample, *x*₁ represents a second negative sample, *M* represents a modality, *M* = 1 represents the first modality, and *M* = *2* represents the second modality.

14. The apparatus according to claim 12, wherein the first feature comprises a joint node feature and a joint connection feature, and the second feature comprises a word order feature and a semantic feature;
the similarity calculation part is specifically configured to calculate a first similarity between the joint node feature and the word order feature by using an inner product; calculate a second similarity between the joint connection feature and the semantic feature by using an inner product; and add the first similarity and the second similarity to obtain the similarity between the first feature and the second feature.

15. A computer device, **characterized by** comprising:
a memory and a processor, wherein the memory and the processor are communicatively connected to each other, the memory stores computer instructions, and the processor, upon executing the computer instructions, executes the power cross-modal bidirectional knowledge transfer method based on intermediary space construction according to any one of claims 1 to 7.

16. A computer-readable storage medium, **characterized in that** the computer-readable storage medium stores computer instructions, and the computer instructions are used to cause a computer to execute the power cross-modal bidirectional knowledge transfer method based on intermediary space construction according to any one of claims 1 to 7.
